# EUROPÄISCHE PATENTANMELDUNG

(11) **EP 4 838 102 A1**
(43) Veröffentlichungstag der Anmeldung: **11.11.2026**
(21) Anmeldenummer: 26166674.7
(22) Anmeldetag: 23.03.2026
(51) Int. Cl.: F15B 1/02, A01B 59/06, E02F 3/36, F15B 1/24, F15B 20/00

(54) **LANDWIRTSCHAFTLICHE ARBEITSMASCHINE**

(30) Priorität: 07.05.2025 DE 102025117506
(71) Anmelder: CLAAS Saulgau GmbH, 88340 Bad Saulgau (DE)
(72) Erfinder: Ober, Martin, 78736 Trichtingen (DE)
(74) Vertreter: CLAAS Gruppe

(57) **Zusammenfassung**

Die Erfindung betrifft eine landwirtschaftliche Arbeitsmaschine (2) mit einem Hydrauliksystem (3) und mit wenigstens einem hydraulisch angetriebenen Aktor (4), wobei das Hydrauliksystem (3) wenigstens über einen Schlauch (5) an einen Druckanschluss (P) und über einen weiteren Schlauch (6) an einen Tankanschluss (T) eines Traktors (1) oder Zugfahrzeugs anschließbar ist, wobei in einer Tankleitung des Hydrauliksystems (3) ein Ausgleichsbehälter (8) angeordnet ist, in welchem Hydraulikflüssigkeit aufnehmbar ist.

## Beschreibung

Die Erfindung betrifft eine landwirtschaftliche Arbeitsmaschine gemäß dem Oberbegriff des Patentanspruchs 1.

Es ist allgemein bekannt, landwirtschaftliche Arbeitsmaschinen hydraulisch anzutreiben. Dabei können beispielsweise Hydraulikzylinder zum Anheben von Auslegern oder hydraulische Drehantriebe zum Antreiben von Förderbändern oder von Rechkreiseln von Schwadern zum Einsatz kommen. Für den Betrieb stellt in der Regel ein Traktor, an den die Arbeitsmaschine angekoppelt ist, die hydraulische Antriebsenergie bereit. Dazu wird das Hydrauliksystem der Arbeitsmaschine mit flexiblen Schläuchen an das Hydrauliksystem des Traktors angeschlossen.

Beim Ankuppeln der Hydraulikschläuche kann es jedoch zu Problemen kommen, wenn sich an einer abgekuppelten Arbeitsmaschine ein Staudruck im Hydrauliksystem aufgebaut hat. Dieser Staudruck kann durch Leckagen in Ventilen oder durch die Erwärmung der Hydraulikflüssigkeit in den Leitungen aufgrund von Sonneneinstrahlung verursacht werden.

Da manche Hydrauliksysteme, insbesondere Load-Sensing-Systeme oder Power-Beyond-Systeme, von Traktoren oder anderen Trägerfahrzeugen, an welche die Arbeitsmaschine angekuppelt werden soll, nicht unter Druck kuppelbar sind, muss die Bedienperson den aufgebauten Druck im Hydrauliksystem der Arbeitsmaschine reduzieren. Dazu kann beispielsweise ein Verschlussventil an der Schlauchkupplung gewaltsam geöffnet werden, indem ein Pin nach innen geschlagen wird. Alternativ kann das Hydrauliksystem an einer Verschraubung geöffnet werden, wozu entsprechendes Werkzeug benötigt wird. In beiden Fällen werden Verschmutzungen durch herausspritzende Hydraulikflüssigkeit verursacht, die beseitigt werden müssen.

Als weitere Alternative könnte ein Absperrhahn vor einem Schlauchkuppler eingebaut werden, der aber sehr lang baut und unpraktisch im Gebrauch ist.

Weiterhin könnte ein Handventil im Hydrauliksystem der Arbeitsmaschine angeordnet werden, mit dem der Überdruck kontrolliert in einen Behälter abgelassen werden könnte, was aber teuer ist und eine Bedienperson muss den Auffangbehälter regelmäßig leeren.

Hiervon ausgehend ist es die Aufgabe der Erfindung, eine neuartige landwirtschaftliche Arbeitsmaschine zu schaffen.

Diese Aufgabe wird erfindungsgemäß durch die kennzeichnenden Merkmale des Patentanspruchs 1 gelöst.

Erfindungsgemäß ist in einer Tankleitung eines Hydrauliksystems einer landwirtschaftlichen Arbeitsmaschine ein Ausgleichsbehälter angeordnet, in welchem Hydraulikflüssigkeit aufnehmbar ist.

Vorzugsweise ist der Ausgleichsbehälter als Zylinder oder als Membrandruckspeicher mit Stickstofffüllung ausgeführt.

Der Zylinder besteht vorzugsweise aus einem Zylinderrohr und einem Kolben, der durch eine Feder an eine Endlage an einem Zylinderkopf schiebbar ist, wobei ein Anschluss für Zufluss von Hydraulikflüssigkeit vorzugsweise im Zylinderkopf angeordnet ist.

Vorzugsweise ist im Zufluss zum Zylinder eine Blende angeordnet, die Druckstöße auf den Kolben dämpft, so dass der Kolben beim Betrieb der Arbeitsmaschine nicht schlagartig an einen Endanschlag fährt.

An einem Boden des Zylinders ist vorzugsweise ein Anschlag angeordnet, der den Weg des Kolbens in Richtung zum Boden begrenzt. Dadurch wird vorteilhaft ein Volumen im Rückraum des Kolbens vorgegeben, in dem sich die vom Kolben verdrängte Luft so verdichten kann, dass die komprimierte Luft einen nur geringen Gegendruck gegen die Kolbenbewegung aufbaut. Auf eine Entlüftung des Zylinders kann dadurch vorteilhaft verzichtet werden.

Vorzugsweise wird zusätzlich auch in einer Druckleitung des Hydrauliksystems ein Ausgleichsbehälter angeordnet, in welchem Hydraulikflüssigkeit aufnehmbar ist.

Weitere Merkmale und Vorteile ergeben sich aus den Unteransprüchen in Verbindung mit der Beschreibung.

Nachfolgend werden die Merkmale der vorliegenden Erfindung anhand bevorzugter Ausführungsformen näher erläutert. In den zugehörigen schematischen Zeichnungen zeigt, die
- Fig. 1: eine als Mähwerk ausgeführte landwirtschaftliche Arbeitsmaschine,
- Fig. 2: einen beispielhaften schematischen Schaltplan eines erfindungsgemäßen Hydrauliksystems, und
- Fig. 3: einen als Zylinder ausgeführten Ausgleichsbehälter.

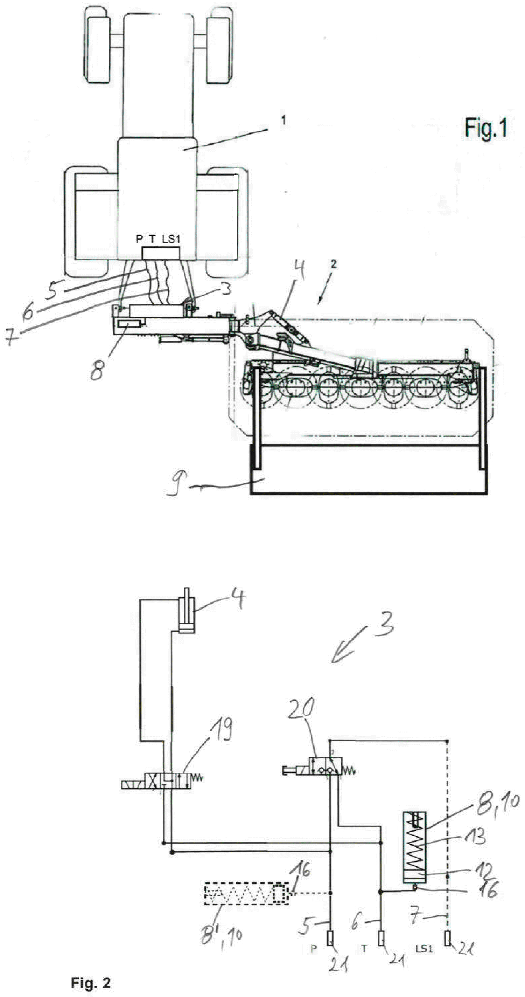

In Fig. 1 ist eine als Mähwerk ausgeführte landwirtschaftliche Arbeitsmaschine 2 dargestellt, die an einem Dreipunktkraftheber eines Traktors 1 angehängt ist. Neben einer nicht dargestellten Antriebsverbindung mit einer Gelenkwelle an einer sogenannten Zapfwelle des Traktors 1 ist das beispielhafte Mähwerk 2 über Hydraulikschläuche 5, 6, 7 mit einem Hydrauliksystem des Traktors 1 verbunden. Der Schlauch 5 verbindet das Hydrauliksystem 3 des Mähwerks 2 mit einer Pumpe, die hydraulische Antriebsenergie bereitstellt, der Hydraulikschlauch 6 ist mit einer Tankleitung verbunden, die druckentspannte Hydraulikflüssigkeit zurück in einen Tank führt, und der optionale Hydraulikschlauch 7 verbindet eine Steuerleitung mit einem Load-Sensing-System des Traktors 1 zur Steuerung des Hydraulikdrucks.

Das Hydrauliksystem 3 des Mähwerks 2 versorgt Aktoren in Form von Hydraulikzylindern oder Drehantrieben mit der erforderlichen hydraulischen Antriebsenergie. Ein nicht dargestellter Drehantrieb oder Hydraulikmotor kommt beispielsweise zum Antrieb eines Querförderbandes 9 zum Einsatz, welches vom Mähwerk 2 gemähtes Erntegut aufnimmt und zur Seite fördert.

Zum Anheben einer Mäheinheit des Mähwerks 2 in eine Vorgewende- oder Transportposition oder zum Teleskopieren, also Längenändern, eines Auslegers sind Aktoren 4 in Form von Hydraulikzylindern vorgesehen.

Beim Abkuppeln der Hydraulikschläuche 5, 6, 7 vom Hydrauliksystem des Traktors 1 werden die Schlauchkupplungen 21 automatisch durch Rückschlagventile druckfest geschlossen, so dass keine Hydraulikflüssigkeit austreten kann. Im Hydrauliksystem 3 des Mähwerks 2 bzw. der Arbeitsmaschine 2 kann sich im abgekuppelten Zustand durch Leckagen, insbesondere in Schieber-Ventilen 19, oder aufgrund einer Erwärmung durch Sonneneinstrahlung ein Staudruck aufbauen.

Zum Abbauen eines solchen Staudrucks bzw. zur Aufnahme von verdrängter Hydraulikflüssigkeit ist an der Arbeitsmaschine 2 bzw. am Mähwerk 2 ein Ausgleichsbehälter 8 vorgesehen. Der Ausgleichsbehälter 8 ist beim beispielhaften Mähwerk 2 an einem Anbaurahmen, mit dem das Mähwerk an den Traktor 1 angekoppelt wird, angeordnet und kann durch eine Schlauchverbindung oder durch Rohrverbindungen mit dem Hydrauliksystem 3 des Mähwerks 2 fluidtechnisch verbunden sein.

Bei der Arbeitsmaschine könnte es sich auch um eine gezogene Maschine handeln. Statt an einen Traktor 1 könnte die Arbeitsmaschine 2 alternativ an ein anderes Zugfahrzeug oder Trägerfahrzeug angekoppelt oder angehängt werden. Als Arbeitsmaschine 2 kommen nicht nur aufgesattelte oder gezogene Mähwerke in Frage, sondern auch andere landwirtschaftliche Maschinen wie Wender, Schwader, selbstladende Ladewagen oder Häckseltransportwagen. Prinzipiell kommen alle Arbeitsmaschinen mit Hydrauliksystemen in Frage, die an einen Traktor oder an ein sonstiges Trägerfahrzeug an- und wieder abkoppelbar sind. Bei der Arbeitsmaschine könnte es sich auch beispielsweise um Bodenbearbeitungsmaschinen, wie Kreiseleggen, Grubber, o.ä. oder um Sämaschinen oder um Maschinen für Pflanzenschutzmaßnahmen, Düngerstreuer, Feldspritzen, Maschinen der Gülletechnik oder auch um Vorsatzgeräte, die an selbstfahrende Erntemaschinen angekoppelt werden können, handeln.

Die Fig. 2 zeigt einen beispielhaften schematischen Schaltplan eines erfindungsgemäßen Hydrauliksystems 3. Das Hydrauliksystem 3 kann über die Schlauchkupplungen 21 an ein Hydrauliksystem eines Traktors 1 oder eines anderen Trägerfahrzeugs angekoppelt werden. Dieses sehr vereinfachte Hydrauliksystem 3 umfasst lediglich einen Aktor 4 in Form eines Hydraulikzylinders, der über ein Schieberventil 19 in allgemein bekannterweise betätigbar ist. Weiterhin ist ein Sitz-Ventil 20 vorgesehen, welches der Aktivierung des Load-Sensing-Systems dient.

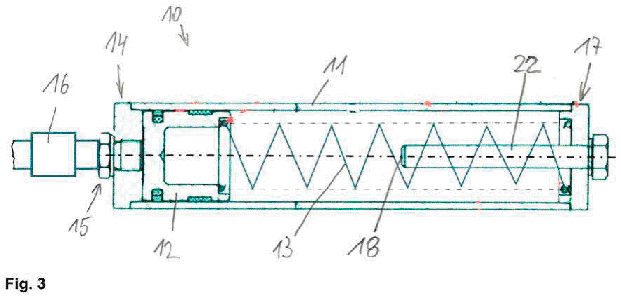

In der Leitung, welche die Hydraulikflüssigkeit zurück zum Tank führt, ist der Ausgleichsbehälter 8 angeordnet. Dehnt sich die im Hydrauliksystem 3 befindliche Hydraulikflüssigkeit aus den oben erläuterten Gründen aus, dann kann dieses Volumen nicht über die abgekoppelten Schlauchkupplungen 21 abfließen, sondern fließt in den Ausgleichsbehälter 8, der vorzugsweise als Zylinder 10 (Fig. 3) gestaltet ist. Im Zufluss kurz vor dem Anschluss 15 des Zylinders 8 ist vorzugsweise eine Blende 16 angeordnet, die Druckstöße beim Zufluss von Hydraulikflüssigkeit dämpft, so dass ein Kolben 12 des Zylinders 10 (Fig. 3) beim Betrieb der Arbeitsmaschine nicht schlagartig zurückfährt.

Sofern im Hydrauliksystem 3 Schieberventile zur Betätigung der Aktoren 4 verwendet werden, kann es ausreichen, lediglich in der zum Tank führenden Leitung einen Ausgleichsbehälter 8 anzuordnen, da sich ein in der Druckleitung aufbauender Hydraulikdruck über innere Leckagen der Schieberventile in die Tankleitung abbaut. Falls nicht sichergestellt werden kann, dass sich ein Druck in einer Druckleitung über innere Leckagen oder sonstige Wege in eine Tankleitung abbaut, dann kann zusätzlich in einer Druckleitung des Hydrauliksystems 3 ein Ausgleichsbehälter 8' angeordnet werden, um die ausgedehnte Hydraulikflüssigkeit aufzunehmen. Dieser kann baugleich zum anderen Ausgleichsbehälter 8 ebenfalls als Zylinder 10 ausgeführt und auch mit einer Blende 16 versehen sein. Ebenso kann auch in der oben genannten Steuerleitung, auch als Lastmeldeleitung bezeichnet, welche den Bedarf an Hydraulikleistung an das Load-Sensing-System meldet, ein Ausgleichsbehälter 8, 8' angeordnet werden.

Der als Zylinder 10 ausgeführte Ausgleichsbehälter 8, 8' wird in Fig. 3 näher erläutert. Der Zylinder 10 besteht aus einem Zylinderrohr 11, das am einen Ende durch einen Zylinderboden 17 und am anderen Ende durch einen Zylinderkopf 14 verschlossen ist. Weiterhin ist im Zylinderrohr 11 ein Kolben 12 angeordnet, der durch eine Feder 13, die sich am Kolbenboden abstützt, gegen den Zylinderkopf 14 gedrückt wird. Im Zylinderkopf 14 ist eine Bohrung eingebracht, durch welche Hydraulikflüssigkeit in den Zylinder 10 einströmen kann. Der Kolben 12 ist so gegenüber dem Zylinderrohr 11 abgedichtet, dass er sich durch die einströmende Hydraulikflüssigkeit gegen die Kraft der Feder 13 in Richtung des Zylinderbodens 17 bewegen kann, ohne dass Hydraulikflüssigkeit in den Bereich zwischen Kolben 12 und Zylinderboden 17 gelangen kann. Durch den Zylinderboden 17 hindurch ist eine Schraube 22 eingeschraubt, deren Ende im Innenraum des Zylinders als Anschlag 18 für den Kolben 12 dient. Durch den Anschlag 18 ist der Weg des Kolbens begrenzt und zwischen dem Kolben 12 und dem Zylinderboden 17 wird ein ausreichend großer Bereich gebildet, in dem die vom Kolben 12 verdrängte Luft verdichtet wird. Dieser Bereich ist so groß dimensioniert, dass die verdichtete Luft nur einen unwesentlichen Gegendruck entgegen der Bewegung des Kolbens 12 aufbaut. So kann vorteilhaft auf eine Entlüftung des Zylinders 10 verzichtet werden.

Der eigentliche Gegendruck des Kolbens 12 beim Zurückfahren, während der Aufnahme von Hydraulikflüssigkeit durch den Zylinder 10, wird durch die Feder 13 erzeugt. Die Feder 13 ist so ausgelegt, dass diese eine Kraft erzeugt, die mindestens so groß ist, dass sie den ausgefahrenen Kolben 12 gegen die Reibungskraft der Kolbendichtung zurück an den Zylinderkopf 14 schieben und dabei die aufgenommene Hydraulikflüssigkeit in eine drucklose Tankleitung zurückführen kann. Die Feder 13 kann auch stärker ausgelegt werden, jedoch nur so groß, dass der Druck im Hydrauliksystem 3 der Arbeitsmaschine 2 einen maximalen Wert erreicht, unter dem ein problemloses Ankoppeln an ein Hydrauliksystem eines Traktors 1 oder sonstiges Trägerfahrzeug möglich ist. Vorzugsweise wird der Ausgleichsbehälter 8, 8' bzw. der Zylinder 10 so ausgelegt, dass sich ein Gegendruck von bis zu 5 bar aufbauen kann.

Besonders bevorzugt wird der Ausgleichsbehälter 8, 8' bzw. der Zylinder 10 so ausgelegt, dass ein Gegendruck zwischen 0,1 bar bis etwa 2 bar entstehen kann. Dadurch wird eine besonders vorteilhaft unproblematische Ankopplung der Hydraulikschläuche 5, 6, 7 an das Hydrauliksystem eines Traktors 1 oder eines anderen Trägerfahrzeugs sichergestellt.

Im Bereich des Zuflusses von Hydraulikflüssigkeit zum Zylinder 10 ist, wie oben bereits erwähnt, eine Blende 16 angeordnet, die Druckstöße dämpft, so dass der Kolben 12 beim Zufluss von Hydraulikflüssigkeit während des Betriebs der Arbeitsmaschine 2 nicht schlagartig an den Anschlag 18 zurückfährt.

Sobald die Schläuche 5, 6, 7 der Arbeitsmaschine 2 vom Hydrauliksystem des Traktors 1 oder einem anderen Trägerfahrzeug abgekoppelt werden, ist das Hydrauliksystem 3 der Arbeitsmaschine 2 durch Rückschlagventile druckfest geschlossen. Kommt es in diesem abgekoppelten Zustand durch Wärmeeinstrahlung, innere Leckagen an Ventilen oder durch sonstige Einflüsse zu einer Ausdehnung der Hydraulikflüssigkeit im Hydrauliksystem 3, dann kann die ausgedehnte Flüssigkeit wie oben beschrieben im Ausgleichsbehälter 8, 8' bzw. im Zylinder 10 aufgenommen werden. Dabei bleibt das Hydrauliksystem 3 der Arbeitsmaschine 2 drucklos oder nimmt einen vom Ausgleichsbehälter 8, 8' bzw. Zylinder 10 vorgegebenen maximalen Druckwert an, unter dem noch ein problemloses Ankoppeln an einen Traktor 1 oder ein sonstiges Trägerfahrzeug möglich ist. Sobald die Arbeitsmaschine 2 bzw. das Mähwerk 2 erneut an einen Traktor 1 oder an ein sonstiges Trägerfahrzeug angekoppelt wird, also insbesondere die Hydraulikschläuche 5, 6, 7 an dessen Hydrauliksystem angeschlossen werden, gibt der Ausgleichsbehälter 8, 8' bzw. der Zylinder 10 die aufgenommene Hydraulikflüssigkeit in das noch drucklose Hydrauliksystem des Trägerfahrzeuges ab. Der Ausgleichsbehälter 8, 8' bzw. der Zylinder 10 versetzen sich in ihre Ausgangslage zurück und sind nach dem nächsten Abkoppelvorgang wieder dazu eingerichtet, Hydraulikflüssigkeit aufzunehmen.

Der Ausgleichbehälter, insbesondere in Form eines Zylinders 10, kann vorteilhaft einfach an unterschiedlich große Hydrauliksysteme angepasst werden, indem sein Durchmesser oder seine Länge so ausgewählt wird, dass er das erforderliche bzw. zu erwartende Volumen an Hydraulikflüssigkeit aufnehmen kann.

Alternativ oder zusätzlich zum oben beschriebenen Zylinder 10 kann ein Membrandruckspeicher vorgesehen werden.

### Bezugszeichenliste

- 1: Traktor
- 2: Arbeitsmaschine/Mähwerk
- 3: Hydrauliksystem
- 4: Aktor
- 5: Hydraulikschlauch
- 6: Hydraulikschlauch
- 7: Hydraulikschlauch
- 8, 8': Ausgleichsbehälter
- 9: Querförderband
- 10: Zylinder
- 11: Zylinderrohr
- 12: Kolben
- 13: Feder
- 14: Zylinderkopf
- 15: Anschluss
- 16: Blende
- 17: Boden
- 18: Anschlag
- 19: Schieber-Ventil
- 20: Sitz-Ventil
- 21: Schlauchkupplung
- 22: Schraube

## Patentansprüche

1. Landwirtschaftliche Arbeitsmaschine (2) mit einem Hydrauliksystem (3) und mit wenigstens einem hydraulisch angetriebenen Aktor (4), wobei das Hydrauliksystem (3) wenigstens über einen Schlauch (5) an einen Druckanschluss (P) und über einen weiteren Schlauch (6) an einen Tankanschluss (T) eines Traktors (1) oder Zugfahrzeugs anschließbar ist, **dadurch gekennzeichnet, dass** in einer Tankleitung des Hydrauliksystems (3) ein Ausgleichsbehälter (8) angeordnet ist, in welchem Hydraulikflüssigkeit aufnehmbar ist.

2. Landwirtschaftliche Arbeitsmaschine (2) nach Anspruch 1, **dadurch gekennzeichnet, dass** der Ausgleichsbehälter (8) als Zylinder (10) oder als Membrandruckspeicher ausgeführt ist.

3. Landwirtschaftliche Arbeitsmaschine (2) nach Anspruch 2, **dadurch gekennzeichnet, dass** der Zylinder (10) aus einem Zylinderrohr (11) und einem Kolben (12) besteht, der durch eine Feder (13) an eine Endlage an einem Zylinderkopf (14) schiebbar ist, wobei ein Anschluss (15) für Zufluss von Hydraulikflüssigkeit im Zylinderkopf (14) angeordnet ist.

4. Landwirtschaftliche Arbeitsmaschine (2) nach Anspruch 3, **dadurch gekennzeichnet, dass** im Zufluss zum Zylinder (10) eine Blende (16) angeordnet ist, die Druckstöße auf den Kolben (12) dämpft.

5. Landwirtschaftliche Arbeitsmaschine (2) nach einem der Ansprüche 2 bis 4, **dadurch gekennzeichnet, dass** an einem Boden (17) des Zylinders (10) ein Anschlag (18) angeordnet ist, der den Weg des Kolbens (12) in Richtung zum Boden (17) begrenzt.

6. Landwirtschaftliche Arbeitsmaschine (2) nach einem der vorangehenden Ansprüche, **dadurch gekennzeichnet, dass** zusätzlich in einer Druckleitung und/oder in einer Steuerleitung oder einer Lastmeldeleitung für ein Load-Sensing-System des Hydrauliksystems (3) ein Ausgleichsbehälter (8) angeordnet ist, in welchem Hydraulikflüssigkeit aufnehmbar ist.

7. Landwirtschaftliche Arbeitsmaschine (2) nach einem der vorangehenden Ansprüche, **dadurch gekennzeichnet, dass** die Arbeitsmaschine als Mähwerk, Schwader, Wender, Ladewagen oder als Bodenbearbeitungsmaschine, wie Kreiselegge oder Grubber, oder als Sämaschine oder als Düngerstreuer, Feldspritze oder als Maschine der Gülletechnik oder als Vorsatzgerät, das an selbstfahrende Erntemaschinen ankoppelbar ist, ausgeführt ist.
